# FASCICULE DE BREVET EUROPEEN

(11) **EP 0 522 924 B1**
(45) Date de publication et mention de la délivrance du brevet: **17.07.1996**
(21) Numéro de dépôt: 92401851.8
(22) Date de dépôt: 30.06.1992
(51) Int. Cl.: G09B 9/04, G09B 9/06, B62D 5/04

(54) **Actionneur rotatif apte à engendrer sur le volant de manoeuvre d'un système de commande, un couple résistant variable selon une loi adaptative**
Drehantrieb zur Erzeugung eines durch adaptierbare Steuerkennlinien veränderbaren Drehmoments am Steuerrad eines Steuersystems
Rotary actuator for generating a resistive torque having an adaptive response characteristic on the steering wheel of a control system

(30) Priorité: 12.07.1991 FR 9108871
(43) Date de publication de la demande: 13.01.1993
(73) Titulaire: SEXTANT AVIONIQUE, F-92366 Meudon la Forêt Cédex (FR)
(72) Inventeur: Barbarin, Rémy, F-86100 Chatellerault (FR)
(74) Mandataire: de Saint-Palais, Arnaud Marie

(56) Documents cités:
- EP-A- 0 282 594
- EP-A- 0 333 108
- EP-A- 0 339 612
- EP-A- 0 379 393
- EP-A- 0 416 266
- GB-A- 2 179 012
- US-A- 4 946 001
- SOVIET PATENTS ABSTRACTS Section PQ Week 8911, 26 avril 1989 Derwent Publications Ltd., London, GB Class P85, AN 89-083767/11 & SU-A-1422237 (AS UKR METAL PHYSIC) 7 Septembre 1988

## Description

La présente invention concerne un actionneur rotatif apte à engendrer sur le volant de manoeuvre d'un système de commande éventuellement asservi, un couple résistant variable selon une loi adaptative, et à transmettre à ce système une information relative à la position angulaire du volant.

Elle s'applique à une multiplicité de systèmes asservis utilisant un volant de manoeuvre pouvant effectuer plusieurs tours dans un sens ou dans l'autre tels que, par exemple, une commande de gouverne d'un engin maritime, une direction de véhicule automobile, un simulateur de conduite utilisant un volant de direction, une télécommande d'élément rotatif tel que, par exemple, une vanne, une tourelle d'engin, un gouvernail de bateau, etc...

Elle a plus particulièrement pour but de résoudre les problèmes relatifs à l'obtention de la combinaison de fonctionnalités suivantes :
- la création, au niveau du volant de manoeuvre, de sensations artificielles (couple résistant, butées) par exemple aussi proches que possible (mais éventuellement atténuées ou même amplifiées) de celles que ressentirait l'opérateur si le volant de manoeuvre attaquait directement (sans assistance) l'objet commandé, le couple résistant engendré à cet effet étant pilotable en temps réel ;
- la transmission, d'une façon extrêmement fiable, des informations relatives à la position angulaire du volant (qui peut varier au-delà de 2π) ;
- le rappel automatique éventuel du volant en position de repos dès qu'il cesse d'être sollicité ou que, d'une façon plus générale, le couple moteur exercé sur le volant devient inférieur au couple résistant engendré par le système, les moyens utilisés pour effectuer ce rappel automatique devant être compatibles avec ceux qui servent à engendrer les susdites sensations ;
- la continuité du fonctionnement du volant de manoeuvre et du détecteur de position angulaire qui lui est associé, en cas de blocage de la partie de l'actionneur destinée à engendrer le couple résistant.

On sait qu'il a déjà été proposé, notamment par la demande de brevet FR No 89 07492, déposée au nom de la SOCIETE FRANCAISE D'EQUIPEMENTS POUR LA NAVIGATION AERIENNE (S.F.E.N.A.), un manche de pilotage destiné à des systèmes de commande de vol électrique pour aéronef. Ce manche de pilotage est articulé à un support au moyen d'un dispositif d'articulation à deux degrés de liberté dont les deux arbres de sortie sont reliés à des électromécanismes conçus de manière à opposer aux mouvements du manche, des efforts résistants conformes à une loi d'effort prédéterminée, et à fixer un point neutre de cet effort résistant en un emplacement déterminé de la course du manche de pilotage (fonction de "Trim").

Il s'avère que la technique utilisée pour ces manches de pilotage, qui répond aux spécificités des commandes de vol d'un aéronef, ne parait pas, a priori, transposable à d'autres applications et, en particulier, celles précédemment mentionnées faisant intervenir des volants de manoeuvre pouvant tourner sur plusieurs tours.

En effet, les manches de pilotage dont il est question dans la demande de brevet FR No 89 07492 précitée, ont une course angulaire ne pouvant excéder 180° et sont rappelés en position de repos par des ressorts de rappel linéaires qui ne peuvent visiblement pas convenir dans le cas d'un volant de manoeuvre.

Par ailleurs, le brevet EP-A-0 339 612 divulgue un actionneur rotatif du type décrit ci-avant dans lequel la position angulaire du volant de manoeuvre n'est pas mesurée de manière fiable, si bien que la continuité de fonctionnement du volant de manoeuvre n'est pas assurée en cas de blocage de la partie de l'actionneur destinée à engendrer le couple résistant.

L'invention surmonte donc ces préjugés et résout ces problèmes grâce à un actionneur rotatif directement couplé à l'arbre rotatif du volant de manoeuvre et qui comprend successivement, à partir dudit axe, un capteur apte à fournir une information sur la position angulaire du volant, un limiteur de couple, un dispositif de mesure du couple résultant exercé sur ledit axe, ce dispositif étant indépendant du susdit capteur de positions angulaires, un embrayage électriquement commandable, et un moteur électrique. Cet actionneur fait en outre intervenir un calculateur qui reçoit des signaux relatifs à la position angulaire du volant et au couple résultant auquel est soumis l'axe du volant, et qui élabore une consigne de couple résultant. Cette consigne est appliquée à l'une des deux entrées d'un soustracteur dont la deuxième entrée reçoit le signal représentatif du couple résultant. Le signal d'erreur fourni par ce soustracteur est alors utilisé pour assurer la commande du moteur de manière à engendrer un couple résistant provoquant l'annulation du signal d'erreur.

Un tel actionneur présente l'avantage de disposer d'un capteur angulaire (éventuellement multitours) indépendant du dispositif de mesure de couple qui mesure un écart angulaire relativement peu important aux deux extrémités d'un organe élastique sur lesquelles sont respectivement appliqués le couple moteur engendré par le volant et le couple résistant engendré par le moteur.

Par ailleurs, le limiteur de couple permet, non seulement d'assurer la commande du système en dépit d'un blocage de la chaîne cinématique allant jusqu'au moteur, mais encore d'effectuer des variations angulaires brutales du volant, en dépit de l'inertie de cette chaîne cinématique.

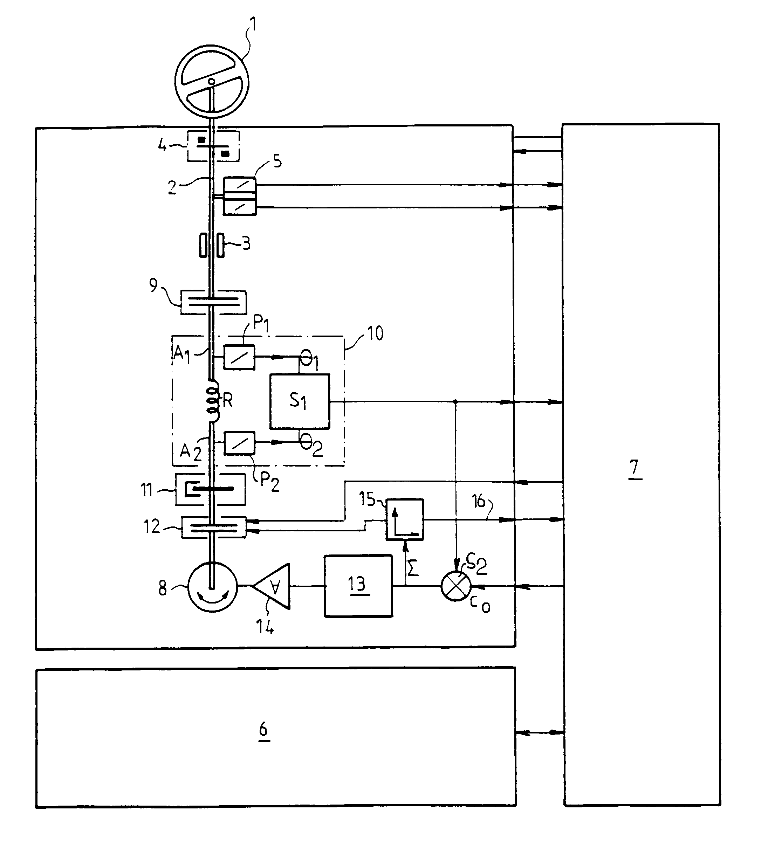

Un mode d'exécution de l'invention sera décrit ci-après, à titre d'exemple non limitatif, avec référence au dessin annexé dans lequel :

La figure unique est un schéma synoptique d'un actionneur selon l'invention, accouplé au volant de direction d'un véhicule automobile à direction asservie.

Dans cet exemple, le volant de direction 1 est monté rotatif au moyen d'un arbre 2 dont la rotation dans des paliers 3 est limitée à deux tours, grâce à un système de butée 4. La position angulaire de cet arbre 2, et donc du volant 1, est déterminée par un détecteur 5 pouvant consister en un capteur optique numérique ou en un capteur analogique tel que, par exemple, un potentiomètre double piste.

L'information fournie par ce détecteur de position angulaire 5, qui constitue la variable de commande du système de direction 6, est donc transmise à un calculateur 7 associé à ce dernier.

Par ailleurs, l'arbre 2 se trouve accouplé à un moteur à courant continu sans balai 8, par l'intermédiaire d'une chaîne cinématique rotative comprenant successivement :
- un limiteur de couple 9 taré à une valeur de couple légèrement supérieure à la valeur maximum souhaitée du couple résistant exercé par le moteur 8 ;
- un dispositif de mesure de couple 10 comprenant, entre deux arbres coaxiaux, à savoir : un arbre menant A₁ et un arbre mené A₂, un ressort de torsion R, ainsi qu'un dispositif de mesure de l'écart angulaire entre l'arbre menant A₁ et l'arbre mené A₂, ce dispositif de mesure pouvant comprendre deux potentiomètres P₁, P₂ pour détecter la position angulaire θ₁, θ₂ des deux arbres ainsi qu'un soustracteur S₁ pour obtenir l'écart angulaire θ₁-θ₂, (ce dispositif de mesure pourrait ne comprendre qu'un seul potentiomètre comprenant deux parties mobiles l'une par rapport à l'autre, et respectivement solidaires des deux arbres) ;
- un amortisseur 11, par exemple de type à courant de Foucault, servant à obtenir un effort résistant visqueux lorsque l'embrayage passe à l'état débrayé (mode dégradé) ; et
- un embrayage 12 à commande électrique de type à appel de courant (débrayé en l'absence de courant d'alimentation).

Le signal délivré par le dispositif de mesure de couple 10 est transmis, d'une part, au calculateur 7 associé au système asservi 8, en complément de l'information sur la position angulaire du volant 1 et, d'autre part, à l'une des deux entrées d'un soustracteur S₂ qui reçoit, sur son autre entrée, un signal représentatif d'une consigne de couple C₀ élaboré par le calculateur, par exemple en fonction de la position angulaire du volant 1, de la vitesse du véhicule, etc...

Le signal d'erreur ε obtenu à la sortie du soustracteur S₂ est filtré par un réseau correcteur 13 avant d'être appliqué à l'entrée d'un amplificateur de puissance 14 qui assure l'alimentation du moteur 8.

La commande de l'embrayage 12 est, quant à elle, assurée par un circuit de sécurité 15 (pouvant être intégré au calculateur 7), qui transmet un signal de commande de débrayage lorsque le signal d'erreur ε émis par le soustracteur S₂ s'élève au-dessus d'un seuil déterminé.

Dans l'exemple représenté sur la figure, le circuit de sécurité 15 est distinct du calculateur 7 et est connecté à ce dernier par une liaison 16 destinée à transmettre un signal d'alarme lorsqu'une commande de débrayage est émise par le circuit de sécurité 15. La commande de l'embrayage peut être en outre directement réalisée par le calculateur 7.

Il convient de rappeler que l'actionneur précédemment décrit a pour but :
- d'opposer aux mouvements de rotation du volant 1 un couple résistant de nature électromécanique, selon une loi d'effort relativement complexe élaborée (en temps réel) par le calculateur 7 (cette loi d'effort pouvant tenir compte de la position angulaire du volant 1 ainsi qu'éventuellement, d'autres paramètres influant sur le comportement du volant tels que, par exemple, la vitesse du véhicule, adhérence des roues) ;
- d'assurer, éventuellement, un retour du volant 1 en position de repos dès qu'il cesse d'être sollicité.

Dans cet exemple, le couple résistant s'opposant au déplacement du volant est essentiellement engendré par des moyens électromécaniques (moteur 8).

Il est déterminé par le double circuit d'asservissement comprenant le calculateur 7 qui élabore le couple de consigne C₀, et la boucle d'asservissement détecteur 10/ soustracteur S₂/réseau correcteur 13/amplificateur 14 qui agit sur le moteur de manière à ce que le couple détecté par le détecteur 10 soit égal au couple de consigne C₀.

Par ailleurs, ce double circuit d'asservissement peut être en outre conçu de manière à assurer le retour sans dépassement du volant en position de repos lorsque celui-ci n'est plus sollicité et, qu'en conséquence, le couple détecté par le dispositif devient très faible.

Dans ce cas, le signal d'erreur ε sera sensiblement égal au couple de consigne C₀ et variera donc en décroissant avec la position angulaire du volant 1, jusqu'à ce que celui-ci atteigne sa position de repos, (position pour laquelle le couple de consigne C₀ sera nul).

Bien entendu, l'actionneur précédemment décrit est conçu de manière à permettre au pilote de poursuivre la conduite du véhicule en dépit de pannes telles que, par exemple, une coupure de l'alimentation électrique de puissance ou un blocage mécanique dans la chaîne cinématique allant au moteur électrique.

Les différentes mesures de sécurité prévues à cet effet font intervenir :
- le limiteur de couple 9 qui autorise la manoeuvre du volant 1 et le transfert des informations fournies par le détecteur 5 dans le cas où le couple résistant engendré par la chaîne cinématique 8 à 12 s'élève au-dessus d'une valeur déterminée et, en particulier, lors du blocage de cette chaîne cinématique ;
- le ressort de torsion R utilisé dans le détecteur de couple qui autorise, dans une plus faible mesure, une manoeuvre du volant 1 avec retour élastique en position de repos, dans le cas d'un blocage mécanique situé plus en aval ; et
- l'embrayage 12 qui passe en position débrayée lors d'une coupure de courant ou à la suite d'une commande de débrayage transmise par le dispositif 15 (dans ce cas, la loi d'effort imposée par l'actionneur est de type visqueux).

A ces fonctions de sécurité, il convient d'ajouter au rôle du limiteur 9 et du ressort R, celui de permettre un déplacement rapide du volant 1 en dépit de l'inertie de l'ensemble de la chaîne cinématique.

Bien entendu, pour accroître la fiabilité de l'actionneur précédemment décrit, il est possible de doubler le dispositif de détection de la position angulaire du volant 1 par un deuxième dispositif de détection. L'un de ces deux dispositifs pourra être de type analogique (potentiomètre) et l'autre, de type numérique (codeur optique).

## Revendications

1. Actionneur rotatif apte à engendrer sur un volant de manoeuvre (1) multitours d'un système de commande, un couple résistant variable selon une loi adaptative,
caractérisé en ce qu'il comprend, d'une part, couplée à l'arbre rotatif (2) du volant (1) de manoeuvre, une chaîne cinématique comprenant successivement un capteur de position angulaire (5) du volant, un limiteur de couple (9), un dispositif (10) de mesure du couple résultant exercé sur ledit axe (2), ce dispositif étant indépendant du susdit capteur (5) de position angulaire, et un moteur électrique (8) apte à appliquer sur ledit arbre (2) un couple variable en fonction d'un signal de commande et, d'autre part, un double dispositif d'asservissement faisant intervenir un calculateur (7) qui élabore un signal de consigne (C₀) du couple résultant appliqué à l'arbre (2) du volant (1), un soustracteur (S₂) qui reçoit sur ses deux entrées le signal de consigne (C₀) et le signal représentatif du couple résultant mesuré par ledit dispositif de mesure (10) et qui délivre un signal d'erreur (ε) servant à assurer la commande du moteur (8), de manière à engendrer sur ledit arbre (2) un couple résistant provoquant l'annulation du signal d'erreur (ε).

2. Actionneur rotatif selon la revendication 1, caractérisé en ce que le susdit volant (1) consiste en le volant de direction d'un véhicule automobile.

3. Actionneur rotatif selon la revendication 2, caractérisé en ce que le système de direction du véhicule automobile est de type assisté.

4. Actionneur rotatif selon la revendication 1, caractérisé en ce que le susdit système de commande est un système asservi.

5. Actionneur rotatif selon la revendication 4, caractérisé en ce que le calculateur (7) fait partie du système asservi.

6. Actionneur rotatif selon l'une des revendications précédentes,
caractérisé en ce que le dispositif de mesure de couple (10) comprend, entre deux arbres coaxiaux (A₁, A₂), un ressort de torsion (R) ainsi qu'un dispositif de mesure de l'écart angulaire entre ces deux arbres (A₁, A₂).

7. Actionneur rotatif selon l'une des revendications précédentes,
caractérisé en ce que la susdite chaîne cinématique comprend, entre le dispositif de mesure de couple (10) et le moteur (8), un embrayage à commande électrique (12) ainsi qu'un amortisseur (11).

8. Actionneur rotatif selon la revendication 7, caractérisé en ce que le susdit embrayage (12) est de type à appel de courant et est commandé par un circuit de sécurité (15) qui transmet une commande de débrayage lorsque le signal d'erreur (ε) émis par le susdit soustracteur (S₂) s'élève au-dessus d'un seuil déterminé.

9. Actionneur rotatif selon l'une des revendications précédentes,
caractérisé en ce que le susdit signal de consigne (C₀) est élaboré par le calculateur (7) à partir d'au moins les informations de position angulaire émises par le capteur (5).

## Claims

1. Rotary acting element capable of generating, on a multiple-turn manoeuvering wheel (1) of a control system, a load moment that can vary in accordance with an adaptive law,
characterized in that it comprises, on the one hand, coupled with the rotary shaft (2) of the manoeuvering wheel (1), a kinematic chain successively comprising a sensor (5) of the angular position of the wheel, a moment limiter (9), a device (10) for measuring the resultant moment exerted on said axis (2), this device being independent of the aforesaid angular position sensor (5), and an electric motor (8) capable of applying to said shaft (2) a moment varying as a function of a control signal, and, on the other hand, a dual automatic control device using a computer (7) elaborating an instruction signal (C₀) for the resultant moment applied to the shaft (2) of the wheel (1), a subtracter (S₂) which receives at its two inputs the instruction signal (C₀) and the signal representing the resultant moment measured by said measuring device (10) and which provides an error signal (ε) serving to control the motor (8), so as to generate on said shaft (2) a load moment causing the error signal (ε) to be cancelled.

2. Rotary acting element as claimed in claim 1, characterized in that said wheel (1) consists in the steering wheel of an automobile.

3. Rotary acting element as claimed in claim 2, characterized in that the steering system of the automobile is of the power-steering type.

4. Rotary acting element as claimed in claim 1, characterized in that said control system is an automatic control system.

5. Rotary acting element as claimed in claim 4, characterized in that the computer (7) is part of the automatic control system.

6. Rotary acting element as claimed in any one of the previous claims, characterized in that said moment measuring device (10) comprises, between two coaxial shafts (A₁, A₂), a torsional spring (R) and a device for measuring the angular variance between said two shafts (A₁, A₂).

7. Rotary acting element as claimed in any one of the previous claims, characterized in that said kinematic chain comprises, between the moment measuring device (10) and the motor (8), an electrically-operated clutch (12) and a damper (11).

8. Rotary acting element as claimed in claim 7, characterized in that said clutch (12) is of the line transient type and is controlled by a safety circuit (15) which transmits a disengaging command when the error signal (ε) emitted by said subtracter (S₂) exceeds a predetermined threshold.

9. Rotary acting element as claimed in any one of the previous claims, characterized in that said instruction signal (C₀) is worked out by the computer (7) from at least the angular position data emitted by the sensor (5).

## Patentansprüche

1. Drehbares Stellglied, das an einem mehrerer Umdrehungen fähigen Bedienungsrad (1) eines Steuersystems ein gemäß einem anpassungsfähigen Gesetz variables Widerstandsmoment erzeugen kann,
dadurch gekennzeichnet, daß es einerseits eine an die Drehwelle (2) des Bedienungsrads (1) gekoppelte kinematische Kette, die nacheinander eine Winkelmeßsonde (5) zur Messung der Winkelstellung des Rads, einen Drehmomentbegrenzer (9), eine Meßvorrichtung (10) zur Messung des resultierenden Drehmoments, das auf die Welle (2) wirkt, wobei diese Vorrichtung von der Winkelmeßsonde (5) unabhängig ist, und einen Elektromotor (8) enthält, der an die Welle (2) ein in Abhängigkeit von einem Steuersignal variables Drehmoment anlegen kann, und daß es andererseits eine doppelte Regelvorrichtung aufweist, die einen Rechner (7), der ein Sollsignal (C₀) des an die Welle (2) des Rads (1) angelegten resultierenden Drehmoments berechnet, und einen Subtrahierer (S₂) enthält, der an seinen beiden Eingängen das Sollsignal (C₀) bzw. das für das resultierende Drehmoment repräsentative Signal empfängt, das von der Meßvorrichtung (10) gemessen wurde, und der ein Fehlersignal (ε) liefert, das dazu dient, die Steuerung des Motors (8) derart zu gewährleisten, daß an der Welle (2) ein Widerstandsmoment erzeugt wird, das die Annulierung des Fehlersignals (ε) bewirkt.

2. Drehbares Stellglied nach Anspruch 1, dadurch gekennzeichnet, daß das Rad (1) aus dem Lenkrad eines Fahrzeugs besteht.

3. Drehbares Stellglied nach Anspruch 2, dadurch gekennzeichnet, daß das Lenksystem des Fahrzeugs ein Servorlenksystem ist.

4. Drehbares Stellglied nach Anspruch 1, dadurch gekennzeichnet, daß das Steuersystem ein Regelsystem ist.

5. Drehbares Stellglied nach Anspruch 4, dadurch gekennzeichnet, daß der Rechner (7) Teil des Regelsystems ist.

6. Drehbares Stellglied nach einem der vorhergehenden Ansprüche, dadurch gekennzeichnet, daß die Drehmoment-Meßvorrichtung (10) zwischen zwei koaxialen Wellen (A₁, A₂) eine Torsionsfeder (R) und eine Meßvorrichtung für den Winkelabstand zwischen diesen beiden Wellen (A₁, A₂) aufweist.

7. Drehbares Stellglied nach einem der vorhergehenden Ansprüche, dadurch gekennzeichnet, daß die kinematische Kette zwischen der Drehmoment-Meßvorrichtung (10) und dem Motor (8) eine Kupplung mit elektrischer Steuerung (12) und einen Stoßdämpfer (11) aufweist.

8. Drehbares Stellglied nach Anspruch 7, dadurch gekennzeichnet, daß die Kupplung (12) von der Art mit Stromstoß ist und von einer Sicherheitsschaltung (15) gesteuert wird, die einen Entkupplungsbefehl überträgt, wenn das vom Subtrahierer (S₂) ausgesandte Fehlersignal (ε) eine bestimmte Schwelle überschreitet.

9. Drehbares Stellglied nach einem der vorhergehenden Ansprüche, dadurch gekennzeichnet, daß das Sollsignal (C₀) vom Rechner (7) ausgehend von mindestens den von der Meßsonde (5) ausgesandten Winkelstellungs-Informationen berechnet wird.
